# EUROPEAN PATENT APPLICATION

(11) **EP 3 634 041 A1**
(43) Date of publication of application: **08.04.2020**
(21) Application number: 18198964.1
(22) Date of filing: 05.10.2018
(51) Int. Cl.: H04W 48/16, H04W 76/11, H04W 48/18, H04W 88/06, H04W 36/14, H04W 8/06

(54) **COMMUNICATION TERMINAL, METHOD FOR REQUESTING A CONNECTION, NETWORK COMPONENT AND METHOD FOR SERVING A COMMUNICATION TERMINAL**

(71) Applicant: NTT DOCOMO, INC., Chiyoda-ku Tokyo 100-6150 (JP)
(72) Inventor: SAMA, Malla Reddy, 80687 Munich (DE); THAKOLSRI, Srisakul, 80687 Munich (DE)
(74) Representative: Viering, Jentschura & Partner mbB Patent- und Rechtsanwälte

(57) **Abstract**

According to one embodiment, a communication terminal is described comprising a receiver configured to receive, from a home core network of the communication terminal, an indication that a slice identification of a network slice of the home network is also valid for another core network and a transmitter configured to send a connection request to the other core network and to request a network slice based on the slice identification.

## Description

The present disclosure relates to communication terminals, methods for requesting a connection, network components and methods for serving a communication terminal.

A core network of a mobile radio communication network according to 5G typically comprises multiple core network slices, wherein each core network slice serves for providing a certain communication service, for example V2X (Vehicle-to-Everything) or eMBB (enhanced Mobile Broadband). A UE registering with a 5GC (5G core network) may use an S-NSSAI (Single Network Slice Selection Assistance information) to identify a network slice that it requests. However, S-NSSAIs may only be valid for one network (e.g. one Public Land Mobile Network PLMN) but not be valid for another. Therefore, it may occur that a UE does not indicate an S-NSSAI when registering with a visited PLMN (VPLMN) when roaming. This may result in a later redirection of the UE to a dedicated network slice becoming necessary. Accordingly, approaches for a more efficient network slice allocation in a roaming scenario are desirable.

According to one embodiment, a communication terminal is provided comprising a receiver configured to receive, from a home core network of the communication terminal, an indication that a slice identification of a network slice of the home core network is also valid for another core network and a transmitter configured to send a connection request to the other core network and to request a network slice based on the slice identification.

According to a further embodiment, a network component of a communication network is provided comprising a transmitter configured to transmit to a communication terminal, for which the communication network is a home core network, an indication that a slice identification of a network slice of a core network of the communication network is also valid for another core network.

Further, a method for requesting a connection and a method for serving a communication terminal according to the communication terminal and the network component described above are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a radio communication system.
Figure 2 shows a message flow diagram illustrating provision of Requested Network Slice Selection Assistance Information.
Figure 3 shows a message flow diagram illustrating the behaviour of a UE (User Equipment) which is in the coverage area of a VPLMN (visited PLMN) and tries to register with the VPLMN.
Figure 4 shows an interworking scenario between 4G and 5G.
Figure 5 shows a message flow diagram illustrating a message flow when a UE moves from 4G to 5G without roaming.
Figure 6 shows a message flow diagram illustrating a message flow when a UE moves from 4G to 5G with roaming.
Figure 7 shows a message flow diagram illustrating a handover of a UE from a VPLMN EPC to a VPLMN 5GC in a Home Routed scenario.
Figure 8 shows a message flow diagram illustrating a message flow when a UE moves from 4G to 5G with roaming.
Figure 9 shows a message flow diagram illustrating the provision of an indication of Default Configured NSSAI when the UE attaches to the EPC.
Figure 10 shows a message flow diagram illustrating the provision of an indication of Default Configured NSSAI when the UE sets up PDN (Packet Data Network) Connectivity in EPC.
Figure 11 shows a message flow diagram illustrating a registration by a UE with a VPLMN based on an S-NSSAI indicated earlier to be valid for the VPLMN.
Figure 12 shows a message flow diagram 1200 illustrating a procedure for a handover in connected mode of a UE.
Figure 13 shows a communication terminal.
Figure 14 shows a flow diagram illustrating a method for requesting a connection.
Figure 15 shows a network component.
Figure 16 shows a flow diagram illustrating a method for serving a communication terminal.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

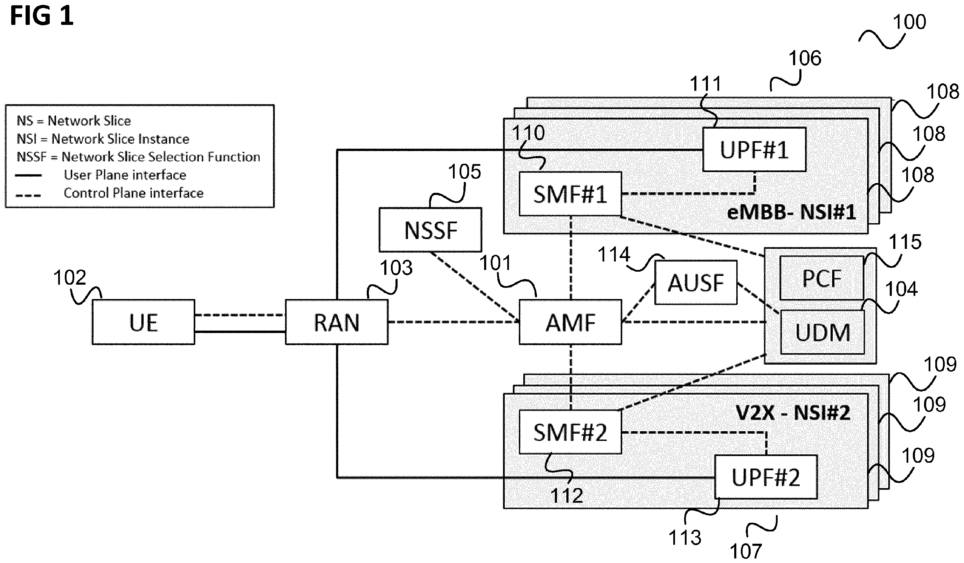

Figure 1 shows a radio communication system 100.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network further comprises an AUSF (Authentication Server Function) 114 and a PCF (Policy Control Function) 115.

The core network may have multiple network slices 106, 107 and for each network slice 106, 107, the operator may create multiple network slice instances (NSIs) 108, 109. In this example, the core network comprises a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in this example, each instance 108 of the first core network slice 106 comprises a first Session Management Function (SMF) 110 and a first User Plane Function (UPF) 111 and each instance 109 of the second core network slice 107 comprises a second Session Management Function (SMF) 112 and a second User Plane Function (UPF) 113.

An S-NSSAI (Single Network Slice Selection Assistance information) identifies a network slice and is comprised of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type .

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

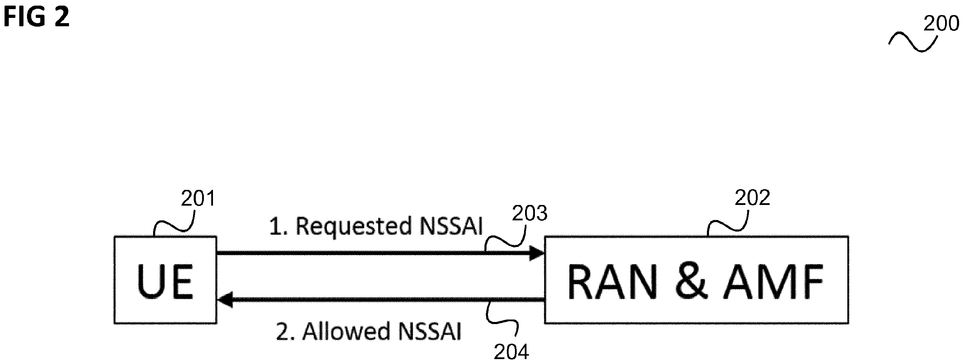

Requested NSSAI is NSSAI that the UE provides to the network during registration as illustrated in figure 2.

Figure 2 shows a message flow diagram 200.

The message flow takes place between a UE 201, e.g. corresponding to UE 102 of figure 1 and a RAN & AMF 202 (e.g. corresponding to RAN 103 and AMF 101 of figure 1) representing the network side.

When the UE 201 registers with the AMF in 203 indicates Requested NSSAI to the AMF (via the RAN). The AMF then sends (via the RAN) Allowed NSSAI in 204 to the UE 201.

The UE 201 derives the Requested NSSAI either from the Configured NSSAI or the Allowed NSSAI. For example, upon UE switch-on or insertion of a SIM (Subscriber Identity Module) into the UE, the UE determines the Requested NSSAI from the Configured NSSAI. On the other hand, for example, in case the UE performs a periodic registration (e.g. due to a tracking area update TAU), it determines the Requested NSSAI from the Allowed NSSAI.

There may be a Default Configured NSSAI configured by the UE's HPLMN (home PLMN) that applies to any PLMN (at least of a certain group, e.g. roaming partners of the HPLMN) for which no specific Configured NSSAI has been provided to the UE. For example, a group of roaming partners (operators of PLMNs) may commonly decide upon a Default Configured NSSAI.

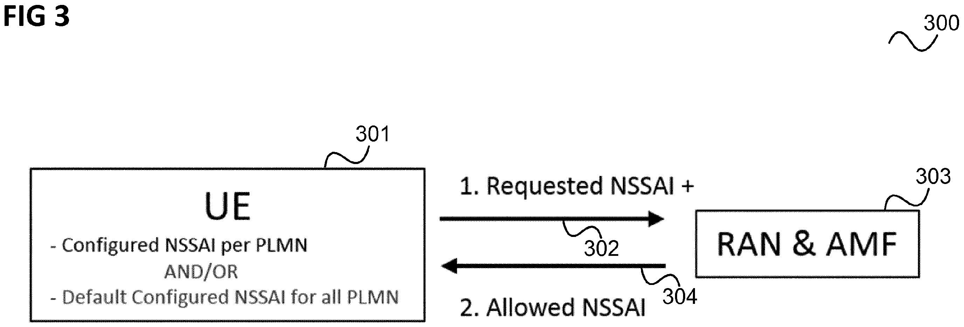

Figure 3 shows a message flow diagram 300 illustrating the behaviour of a UE 301 which is in the coverage area of a VPLMN (visited PLMN, i.e. not in the HPLMN of the UE 301) and tries to register with the VPLMN.

The UE 301 for example corresponds to UE 102 of figure 1. The network side is indicated by a RAN & AMF 302 (e.g. corresponding to RAN 103 and AMF 101 of figure 1 but of a VPLMN).

For registration, the UE 301 first checks whether it has Configured NSSAI value of this PLMN (the VPLMN) or not.

If yes, the UE 301 sends a registration request in 303 to the network side 303 including the Requested NSSAI from the Configured NSSAI for this PLMN.

If the UE 301 does not have a Configured NSSAI for this PLMN, it checks whether it has a Default Configured NSSAI. If it has a Default Configured NSSAI it sends the registration request with an indication of the Requested NSSAI corresponding to the Default Configured NSSAI value in 302.

If the UE neither has Configured NSSAI for this PLMN nor a Default Configured NSSAI, it sends the registration request in 302 with empty Requested NSSAI (i.e. not containing any S-NSSAI values).

The network side 302 responds in 304 with an indication of the Allowed NSSAI (which includes the VPLMN S-NSSAI) along with the Mapping Of Allowed NSSAI (which is VPLMN S-NSSAI mapped to the HPLMN S-NSSAI for a UE).

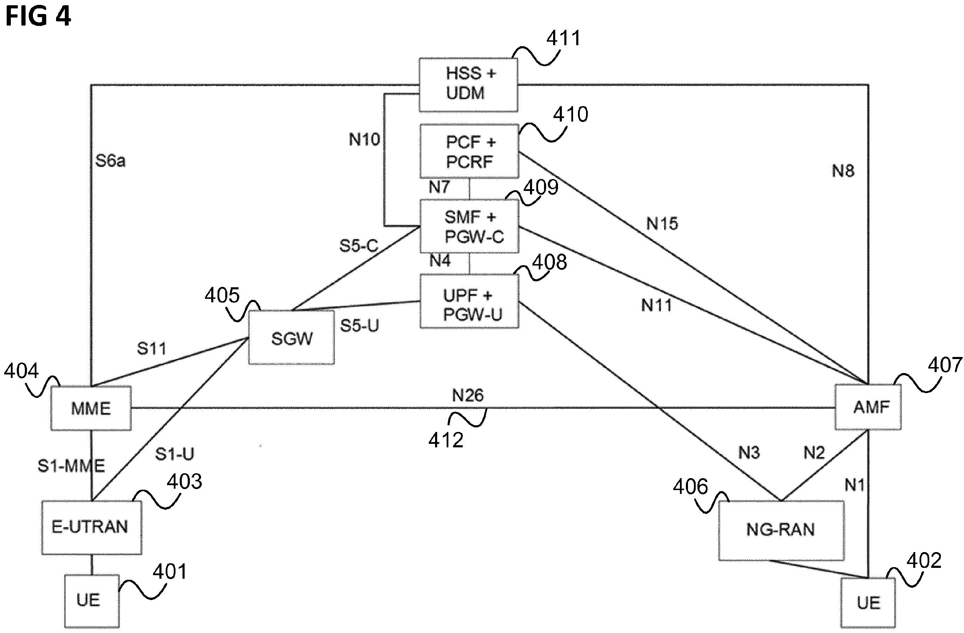

Figure 4 shows an interworking scenario between 4G and 5G.

A communication system 400 comprises a 4G (Fourth Generation) UE (User Equipment) 401 and a 5G (Fifth Generation) UE 402, which may be the same mobile terminal at first operating as 4G UE 401 and, after moving or a handover, operating as 5G UE 402, i.e. the UEs 401, 402 may be the same UE (e.g. corresponding to the UE 102 of figure 1), first connected to a 4G mobile communication network and then to a 5G mobile communication network.

The 4G UE 401 is connected via a 4G radio access network 403, i.e. an E-UTRAN (evolved UMTS (Universal Mobile Telecommunications System) Terrestrial Radio Access Network) to an MME (Mobility Management Entity) 404 and a SGW (Serving Gateway) 405.

The 5G UE 402 is connected to a 5G radio access network 406 and an AMF (Access and Mobility Management Function) 407.

The communication system 400 comprises components which combine 4G and 5G functionalities. These include a UPF (User Plane Function) + PGW-U (Packet Data Network Gateway User Plane) 408, an SMF (Session Management Function) + PGW-C (PGW Control Plane) 409, a PCF (Policy Control Function) + PCRF (Policy and Charging Rules Function) 410 and an HSS (Home Subscriber Server) + UDM (Unified Data Management) 411.

The SGW 405 is connected to the SMF + PGW-C 409 and the UPF + PGW-U 408. The MME 404 is connected to the HSS + UDM 411. The AMF 407 is connected to the PCF + PCRF 410, the HSS + UDM 411 and the SMF + PGW-C 409. The 5G RAN 406 is connected to the UPF + PGW-U 408.

Furthermore, the MME 404 and the AMF 407 may be connected by an N26 interface 412.

The MME 404, the SGW 405, the UPF + PGW-U 408, the SMF + PGW-C 409, the PCF + PCRF 410 and the HSS + UDM 411 are part of an Evolved Packet Core (EPC), i.e. part of the core network of the 4G mobile communication network.

The AMF 407, the UPF + PGW-U 408, the SMF + PGW-C 409, the PCF + PCRF 410 and the HSS + UDM 411 are part of a 5GC, i.e. part of the core network of the 5G mobile communication network. Thus, components which combine functionalities of 4G and 5G are part of both the 4G core network and the 5G core network. The 5G functionalities and components may correspond to those shown in figure 1. In particular, they may be provided multiple times for different network slices and/or network slice instances.

The SMF+PGW-C 409 is a control plane entity (common for the 4G (EPC) and the 5G core network (5GC)) for Session Management, it terminates the GTP-C (GPRS Tunneling Protocol - Control Plane) towards EPC (by the S5 interface to SGW 105) and HTTP/REST (Hypertext Transfer Protocol/Representational State Transfer) towards 5GC (by the N11 interface to AMF 407).

The HSS+UDM 111 is a subscription database (common for the EPC and the 5GC). It terminates a diameter towards EPC (via the S6a interface to MME 404) and HTTP/REST towards 5GC (via the N8 interface to the AMF 407 and the N10 interface to the SMF 409). In a communication system where the N26 interface is not deployed, the mobility source network and target network may share the UE subscription profile via HSS+UDM.

The SMF + PGW-C 409 may implement a plurality of SMFs (or SMF instances) and PGWs (or PGW instances or PGW resources). A UE 401 may have one or more PDN (Packet Data Network) connections in EPC. These PDN connections can be with the same or different PGWs

As mentioned above, a UE 401, 402 may move from the 4G network to the 5G network.

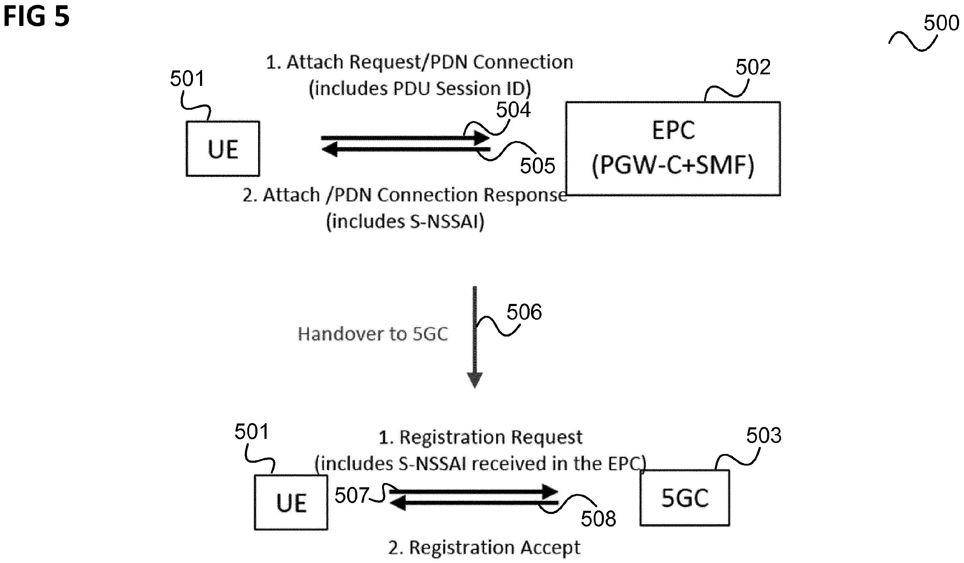

Figure 5 shows a message flow diagram 500 illustrating a message flow when a UE 501 moves from 4G to 5G without roaming (i.e. within its HPLMN).

The message flow takes place between the UE 501 and an EPC 502 (in particular a PGW-C + SMF) and the UE 501 and the 5GC 503.

During Attach and PDN connection establishment in the EPC 502, the UE 501 allocates a PDU Session ID and sends it to the PGW-C+SMF via PCO (Protocol Configuration Options) in 504.

An S-NSSAI associated with a PDN connection is determined based on the operator policy by the PGW-C+SMF and is sent to the UE in PCO in 505.

When the UE moves from EPC to 5GC in 506, e.g. in case of a handover, the UE 501 indicates the S-NSSAIs (received from 502 EPC) associated with its established PDN connections by the Requested NSSAI which it includes in the RRC Connection Establishment and in NAS Registration procedure messages to the 5GC 503 in 507.

The 5GC 503 responds in 508 with a registration accept.

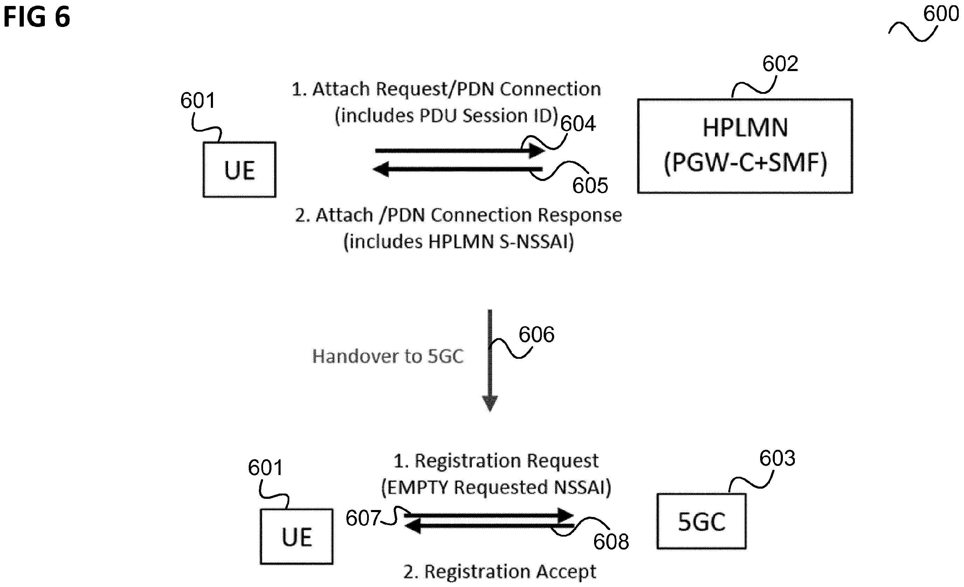

Figure 6 shows a message flow diagram 600 illustrating a message flow when a UE 601 moves from 4G to 5G in the VPLMN roaming (i.e. from an EPC of its VPLMN to a 5GC of a VPLMN).

The message flow takes place between the UE 601 and an HPLMN EPC 602 (in particular a PGW-C + SMF) (with which the UE communicates via the VPLMN EPC) and the UE 601 and the VPLMN 5GC 603.

During Attach and PDN connection establishment in the EPC 602, the UE 601 allocates a PDU Session ID and sends it to the PGW-C+SMF of a HPLMN via PCO (Protocol Configuration Options) in 604.

An S-NSSAI (of the HPLMN) associated with the PDN connection is determined based on the operator policy by the PGW-C+SMF and is sent to the UE in PCO in 605.

According to current 3GPP (Third Generation Partnership Project) specification, when the UE moves from EPC to 5GC in 606, e.g. in case of a handover, the UE 601 does not include the HPLMN S-NSSAI in the RRC connection establishment, since it is assumed that this value is not valid in the VPLMN. Thus, the UE 601 sends an empty Requested NSSAI or does not send any S-NSSAI in 607, but includes HPLMN S-NSSAI values which is received from PGW-C+SMF from EPC in the NAS registration messages.

Thus, according to current 3GPP specification (Release 15), the UE does not includes the HPLMN S-NSSAI in the RRC connection establishment even if it is valid for other PLMNs (including the VPLMN to which 5GC 603 belongs).

The 5GC 603 responds in 608 with a registration accept.

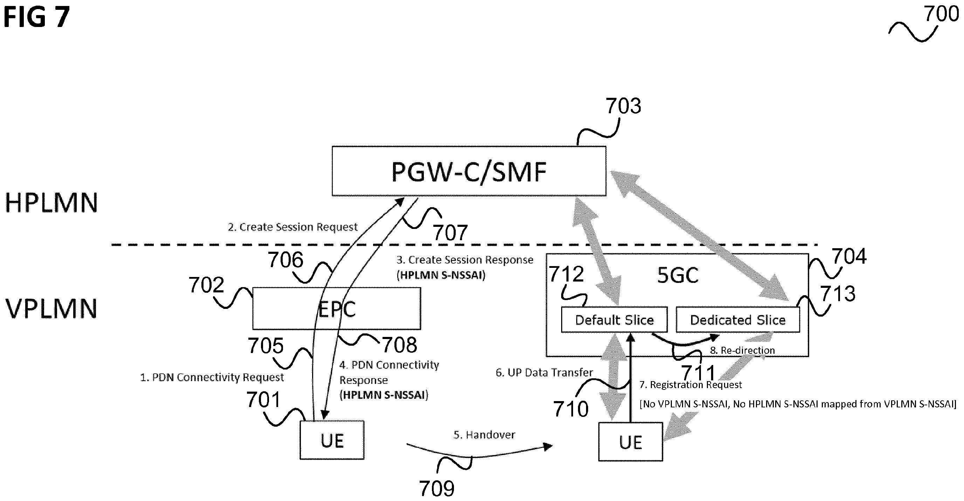

When the UE does not include an S-NSSAI when registering in 5GC after moving there from EPC (e.g. both of a VPLMN), a redirection may become necessary in 5GC. This is illustrated in figure 7.

Figure 7 shows a message flow diagram 700 illustrating a handover of a UE 701 from a VPLMN EPC to a VPLMN 5GC in a Home Routed (HR) scenario.

The message flow takes place between the UE 701, the EPC 702 of the VPLMN, a PGW-C+SMF 703 of the UE's HPLMN, and the 5GC 704 of the VPLMN.

In 705, the UE 701 sends a PDN Connectivity Request to the EPC 702 to establish a PDN connectivity with EPC.

In 706, the EPC 702 sends a create session request to the PGW-C+SMF 703. In detail, the MME in 702 determines that PDN Connectivity needs to be home routed and selects the HPLMN's PGW-C (PGW) 703 and triggers the Create Session Request via SGW in 702 to the PGW-C 703.

In 707, the PGW-C+SMF 703 (in the UE's HPLMN) provides a HPLMN S-NSSAI for the associated PDN connection by means of a create session response towards to the UE.

In 708, the EPC 702 sends a PDN Connectivity Response 708 to the UE 701.

When the UE moves 701 from EPC 702 to 5GC 704, e.g. due to a handover in 709, the UE does not include the HPLMN S-NSSAI in the Registration Request in 710 because the UE does not have VPLMN S-NSSAI in the Configured NSSAI and it is not able to map HPMN S-NSSAI values to the VPLMN S-NSSAI values.

The 5GC User plane data transfer is therefore at first performed by a default slice 712 and then the 5GC 704 performs a re-direction to a dedicated slice 712 (e.g. the correct slice for the UE 701, e.g. according to its subscription or for example a slice for dedicated to V2X (Vehicle-to-Everything) or to eMBB (enhanced Mobile Broadband)) in 711.

Thus, in this example, there is a need to redirect traffic from the default slice 712 to the dedicated slice 713.

In the following, approaches are described which allow avoiding slice redirection, in particular in, but not limited to, a HR roaming case as illustrated in figure 7.

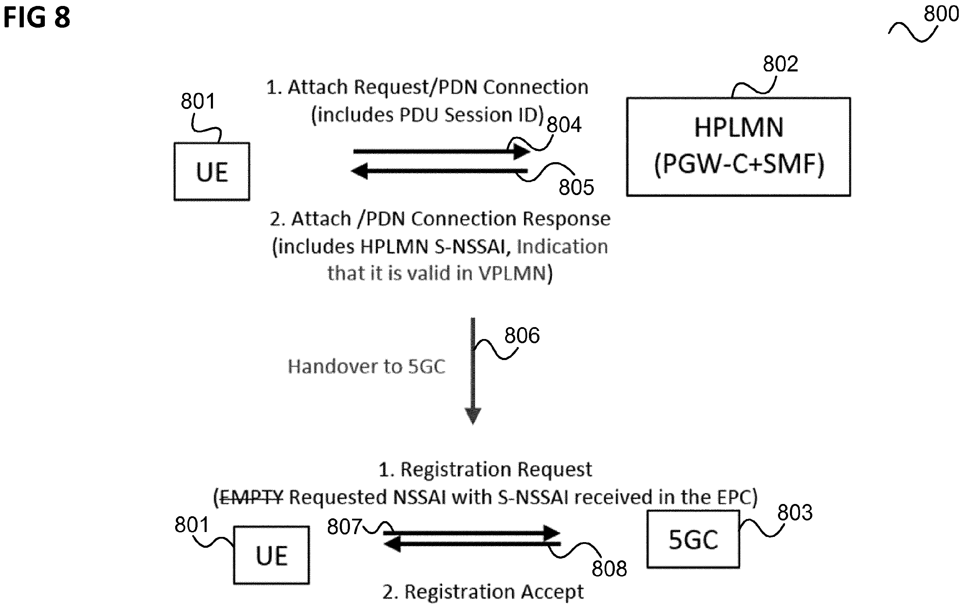

Figure 8 shows a message flow diagram 800 illustrating a message flow when a UE 801 moves from 4G to 5G with roaming (i.e. from an EPC of its HPLMN to a 5GC of a VPLMN) according to an embodiment.

The message flow takes place between the UE 801 and an VPLMN EPC and HPLMN's PGW-C+SMF 802 (in particular a PGW-C + SMF) and the UE 801 and the VPLMN 5GC 803.

During Attach and PDN connection establishment in the EPC 802, the UE 801 allocates a PDU Session ID and sends it to the PGW-C+SMF via PCO (Protocol Configuration Options) in 804.

An S-NSSAI (of the HPLMN) associated with the PDN connection is determined by the PGW-C+SMF (specifically the PGW-C) and is sent to the UE in PCO in 805 by means of an Attach/PDN Connection Response.

In contrast to the flow of figure 8, the PGW-C+SMF 802 includes, in the response of 805, an indication to the UE 801 that the S-NSSAI is also valid in the VPLMN or any VPLMN (if the PGW-C+SMF 802 has determined based on local/operator configuration or policy that this is the case). The S-NSSAI may for example be valid in the VPLMN because it is a default S-NSSAI. In addition, the PGW-C+SMF may also provide some rules (e.g. UE Route Selection Policy (URSP) or Network Slice Selection Policy (NSSP)) to the UE for applications association with the provided S-NSSAI.

Thus, the UE 801 knows that the S-NSSAI is valid in the VPLMN.

When moving to 5GC in 806, during EPC to 5GC handover, the UE 801 sends, in 807, a Requested NSSAI including the S-NSSAI it received in 805 to the 5GC 803. It may further indicate in the registration request that this S-NSSAI is the default configured NSSAI value.

The 5GC 803 responds in 808 with a registration accept.

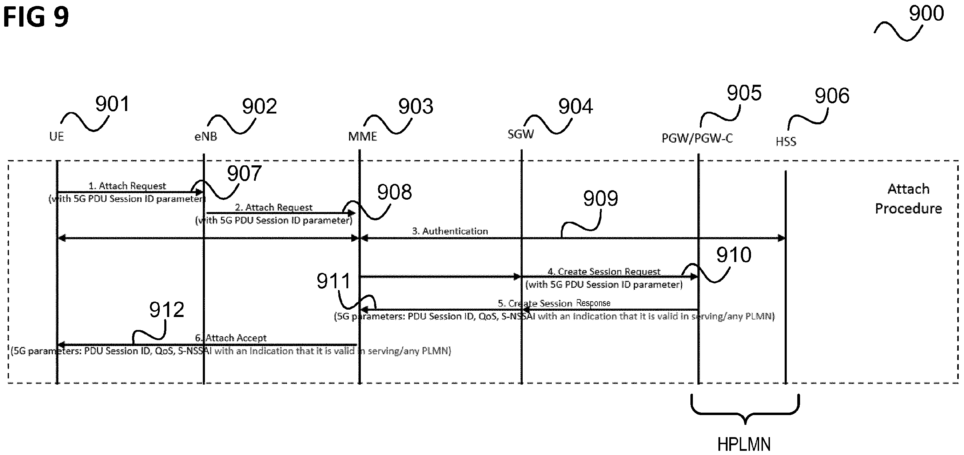

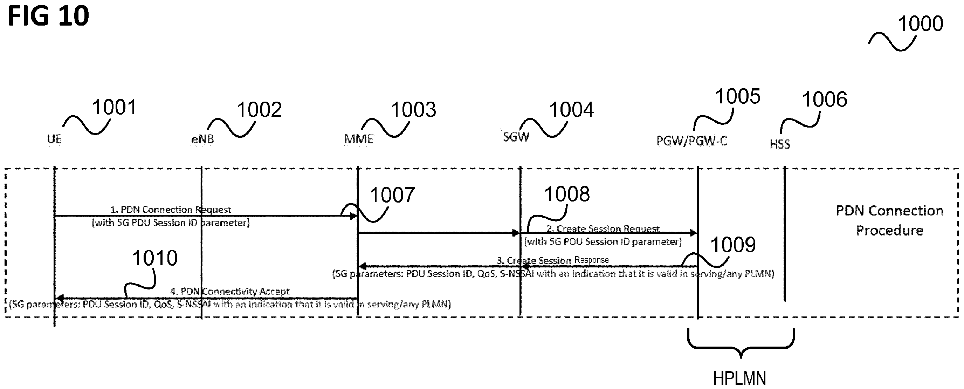

As illustrated in figure 8, the S-NSSAI along with the indication that it is valid for other PLMNs (e.g. is the VPLMN) may be transmitted from the EPC during attach procedure or during PDN connection establishment. Examples for procedures for these two options (which may both be used, also in combination) are shown in figures 9 and 10, respectively.

Figure 9 shows a message flow diagram 900 illustrating the provision of an indication of Default Configured NSSAI or an indication that S-NSSAI is valid in the VPLMN or any PLMN when the UE attaches to the EPC according to an embodiment.

The message flow takes place between a UE 901, a base station (eNB) 902, an MME 903, a SGW 904, a PGW or PGW-C 905 and a HSS 906. The PGW/PGW-C 905 and the HSS 906 are part of the UE's HPLMN 5GC. The eNB 902, the MME 903 and the SGW 903 may be part of a VPLMN EPC.

In 907, the UE 901 sends an attach request including a 5G PDU session ID) to the eNB 902.

In 908, the eNB 902 forwards the attach request to the MME 903.

In 909, the MME 903 performs authentication of the UE 901.

In 910, the MME 903 sends, via the SGW 904, a create session request to the PGW/PGW-C 905 (including the PDU Session ID).

In 911, PGW/PGW-C determines an S-NSSAI associated with the PDN Connection and along with an indication that it is valid in (one or more) other PLMNs (e.g. that this S-NSSAI is from/to the Default Configured NSSAI or that it is valid in at least the VPLMN to which eNB 902, MME 903 and SGW 904 belong) and sends to the UE in PCO via the SGW 904 to the MME 903 in the create session response. If required, the PGW-C 905 may include application association policy (e.g. URSP or NSSP)in the PCO to the UE.

In 912, the MME 903 sends an attach accept to the UE 901 along with the PCO information received from PGW/PGW-C in 911 which includes the S-NSSAI and an indication that it is valid in (one or more) other PLMNs.

The UE 901 may then store the S-NSSAI, the indication (e.g. the indication for this S-NSSAI that it is the Default Configured NSSAI) for later use when registering with the 5GC of the VPLMN and the PLMN ID associated with the PDN connection.

Figure 10 shows a message flow diagram 1000 illustrating the provision of an indication of Default Configured NSSAI when the UE sets up PDN Connectivity in EPC according to an embodiment.

The message flow takes place between a UE 1001, a base station 1002, an MME 1003, a SGW 1004, a PGW or PGW-C 1005 and a HSS 1006. The PGW/PGW-C 1005 and the HSS 1006 are part of the UE's HPLMN 5GC. The eNB 1002, the MME 1003 and the SGW 1003 may be part of a VPLMN EPC.

In 1007, the UE 1001 sends a PDN connectivity request including a 5G PDU session ID) to the MME 1003 (via the eNB 1002).

The MME 1003, the SGW 1004 and the PGW/PGW-C (and possibly further components) follow the PDN Connectivity Request Procedure for the EPC.

In particular, in 1008, the MME 1003 sends, via the SGW 1004, a create session request to the PGW/PGW-C 1005 (including the PDU Session ID).

In 1009, if the PGW-C+SMF 1005 accepts to provide interworking of the PDN connection with 5GC, it determines the S-NSSAI associated with the PDN connection based on the operator policy. The PGW-C+SMF 1005 sends a S-NSSAI associated with the PDN connection and an indication that it is valid in (one or more) other PLMNs (e.g. that it is a default S-NSSAI or that it is valid in at least the VPLMN to which eNB 1002, MME 1003 and SGW 1004 belong) to the UE via PCO in a create session response via the SGW 1004 to the MME 1003. The PGW-C+SMF 1005 may determine and/or generate such an indication (e.g. based on operator mapping the PGW-C+SMF to such a default configured slice and/or based on local policy configuration per UE and/or per slice in the PGW-C+SMF or UE subscription information received from the UDM, etc). In addition, if required, the PGW-C 1005 may include application association policy (e.g. URSP or NSSP or local configuration policy)in the PCO to the UE.

In 1010, the MME 1003 sends PDN connectivity accept to the UE 1001 including PCO received in 1009 which including in particular the S-NSSAI and an indication that it is valid in (one or more) other PLMNs.

The UE 1001 may then store the S-NSSAI, the indication (e.g. the indication for this S-NSSAI that it is the Default Configured NSSAI) for later use when registering with the 5GC of the VPLMN and the PLMN ID associated with the PDN connection.

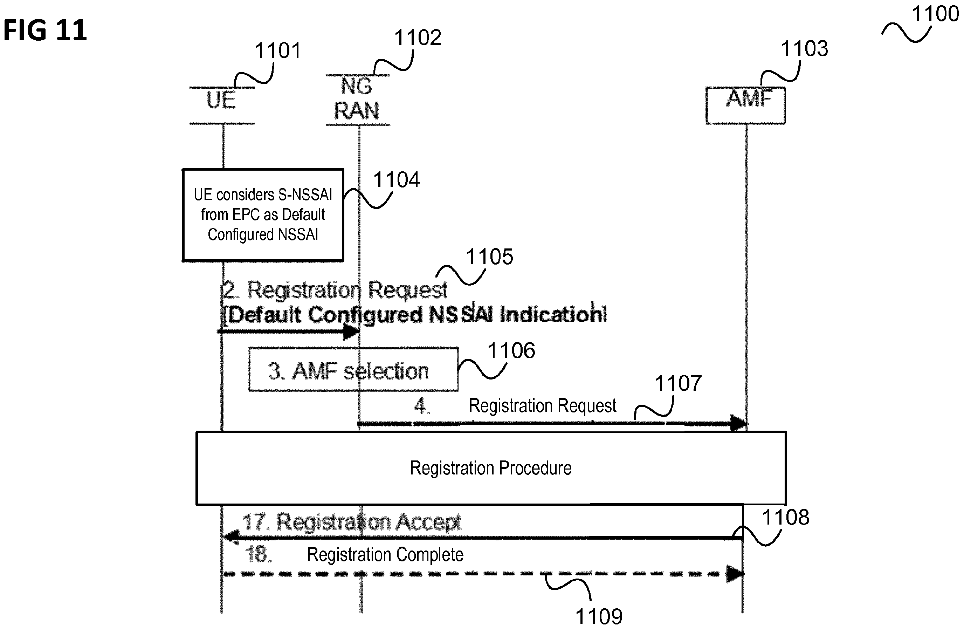

Figure 11 shows a message flow diagram 1100 illustrating a registration by a UE with a VPLMN 5GC based on an S-NSSAI indicated earlier to be valid for the VPLMN.

The message flow takes place between a UE 1101, a 5G RAN 1102 and an AMF 1103 of the VPLMN.

It is assumed that the UE 1101 has received from an EPC an indication that an S-NSSAI of the UE's HPLMN is also valid for the VPLMN in PCO. The UE 1101 may for example have received this indication according to figure 9 or 10.

Accordingly, in 1104, the UE 1101 considers the S-NSSAI received from the EPC as Default Configured NSSAI.

In 1105, the UE 1101 sends a registration request to the RAN 1102 (e.g. similar to 807 of figure 8). In the registration request, the UE 1101 includes the S-NSSAI (which is received from EPC) in the Requested NSSAI along with an indication that it is the Default Configured NSSAI. In 1106, the RAN 1102 performs AMF selection based on the Requested NSSAI and forwards the registration request to the selected AMF 1103 in 1107.

The AMF 1103 (and further 5GC components such as PGW-C, PCF, HSS etc.) then perform the registration procedure. This may in particular include that the AMF 1103 fetches the UE's context from an MME of the EPC. In the registration procedure, a slice is selected for the UE based on the S-NSSAI indicated in the registration request.

After the registration procedure, the AMF 1103 sends a registration accept to the UE 1101 in 1108 and the registration is complete in 1109. With registration accept or after registration procedure, the AMF may provide the Configured NSSAI of a VPLMN to the UE.

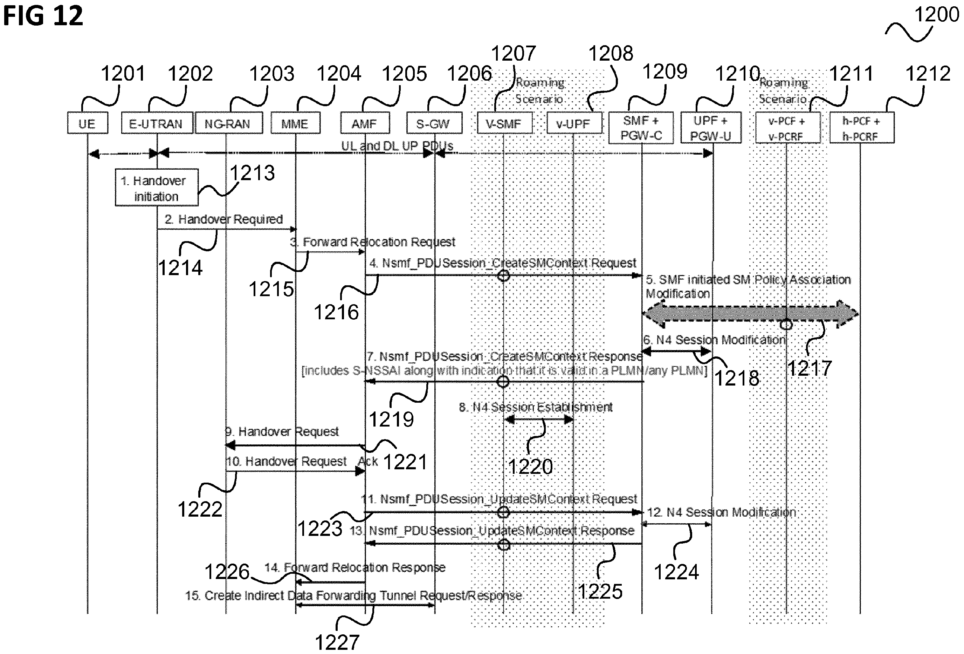

The procedure shown in figure 11 may for example be applied in case the UE 1101 moves from EPC to 5GC in idle mode. For a handover from EPC to 5GC in connected mode, i.e. for connected mode mobility, a procedure may be carried out as illustrated in figure 12 before the UE performs a registration with the 5GC (during which it then includes an S-NSSAI in the Requested NSSAI e.g. as in 1105).

Figure 12 shows a message flow diagram 1200 illustrating a procedure for a handover in connected mode of a UE.

The message flow takes place between a UE 1201, an 4G RAN (E-UTRAN) 1202, a 5G RAN 1203, an MME 1204, an AMF 1205, an S-GW 1206, a visited SMF 1207 (of a VPLMN), a visited UPD 1208 (of the VPLMN), an SMF + PGW-C 1209 (of the UE's HPLMN), a UPF + PGW-U 1210 (of the UE's HPLMN), a visited PCF+PCRF 1211 (of the VPLMN) and a PCF+PCRF 1212 (of the UE's HPLMN).

It is assumed that before the handover, the UE 1201 exchanges uplink and downlink user plane PDUs (packet data units) via the E-UTRAN 1202, the S-GW 1206 and the UPF+PGW-U.

In 1213, the E-UTRAN 1202 initiates a handover and sends, in 1214, an indication that a handover is required to the MME 1206.

In 1215, the MME sends a forward relocation request to the AMF 1205.

In 1216, the AMF 1205 sends a PDU session and create SM context request to the HPLMN's SMF+PGW-C 1209 via the visited SMF 1207.

In 1217, the SMF+PGW-C 1209 may perform an SMF initiated SM policy association modification with the PCF+PCRF 1212 via the visited PCF+PCRF 1211.

In 1218, the SMF+PGW-C 1209 and the UPF+PGW-U 1210 perform N4 session modification.

In 1219, the SMF+PGW-C 1209 sends a PDU session and create SM context response to the AMF 1205. The PDU session and create SM context response includes an S-NSSAI associated with a PDU session and an indication that this S-NSSAI is valid in the VPLMN (or that it is valid in any other PLMN same as Default configured NSSAI e.g. defining a S-NSSAI value based mutual agreement of a group of roaming partners of the HPLMN)). This happens via the visited SMF 1207, i.e. the SMF+PGW-C 1209 indicates to the visited SMF 1207 that this S-NSSAI is valid in the VPLMN (or that it is default configured NSSAI) and the visited SMF 1207 notifies the AMF 1205. If needed, AMF may perform visited SMF relocation based received information (e.g. S-NSSAI with an indication) from HPLMN's PGW-C+SMF.

In 1220, the visited SMF 1207 and the visited UPF 1208 perform N4 session establishment.

In 1221, the AMF 1205 sends a handover request to the 5G RAN 1203 which the 5G RAN acknowledges in 1222.

In 1223, the AMF 1205 sends a PDU session update SM context request to the SMF+PFW-C 1209 via the visited SMF 1207.

In 1224, the SMF+PGW-C 1209 and the UPF+PGW-U 1210 perform N4 session modification.

In 1225, the SMF+PFW-C 1209sends a PDU session update SM context response to the AMF 1205 via the visited SMF 1207. In 1226, the AMF 1205 sends a forward relocation response to the MME 1204.

In 1227, the MME 1204 and the S-GW 1206 exchange a create indirect data forwarding request and response.

The indication of 1219 may also be exchanged between the NSSFs for the AMF relocation/re-selection during mobility/handover.

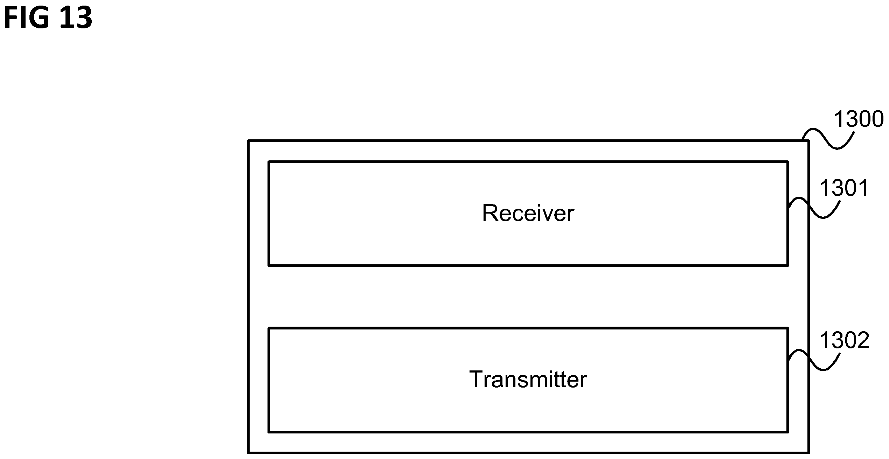

In summary, according to various embodiments, a communication terminal 1300 is provided as illustrated in figure 13.

Figure 13 shows a communication terminal 1300.

The communication terminal 1300 comprises a receiver 1301 configured to receive, from a home core network of the communication terminal, an indication that a slice identification of a network slice of the home core network is also valid for another core network (e.g. for a core network serving a coverage area in which the communication terminal is located, i.e. the other core network is for example the terminal's serving core network).

The communication terminal 1300 further comprises a transmitter 1302 configured to send a connection request to the other core network and to request a network slice based on the slice identification.

According to various embodiments, in other words, a communication terminal receives, from its home network (e.g. HPLMN), an indication that a slice identification (e.g. an S-NSSAI) is also valid for a visited network. In reaction, the communication terminal (e.g. a UE configured to operate according to 4G and 5G) indicates, when it registers with the visited network, a requested network slice by means of the slice identification.

The approach of figure 13 enables the communication terminal to continue to access a desired network slice when the slice's S-NSSAI is also valid in the visited network. It also allows reducing handover time i.e. signalling messages between the home network (including the home core network) and the visited network (including the visited core network) in case of a handover.

The indication that a slice identification is also valid for a visited network may for example be a Default Configured NSSAI Indication, e.g. an indication that the slice identification (e.g. an S-NSSAI) is a Default Configured NSSAI.

The indication may be an indication that the slice identification is also valid for a plurality of core networks, wherein the plurality of core networks includes the other core network (which may e.g. be a visited core network, e.g. a core network of a VPLMN).

The home core network and the other core network, also referred to as first core network and second core network or home core network and visited core network, are for example part of a first mobile radio communication network and a second mobile radio communication network, respectively. Accordingly, the communication terminal is for example a mobile radio terminal. The mobile radio communication networks are for example cellular mobile radio communication network. The first core network and the second core network operate according to an architecture having core network slices.

The home core network is the home core network of the communication terminal according to a subscription of the communication terminal. The communication terminal for example includes a subscriber identity module corresponding to a subscription which makes the home core network the home core network for the communication terminal, for example issued by an operator of the home core network based on a contract between the user of the communication terminal and the operator of the home core network. The other core network is for example a core network of a roaming partner of the operator of the core network. The home core network and the other core network for example serve different coverage areas (e.g. different countries).

The transmitter of the communication terminal may be configured to send the connection request by means of a connection request message including the slice identification as requested network slice.

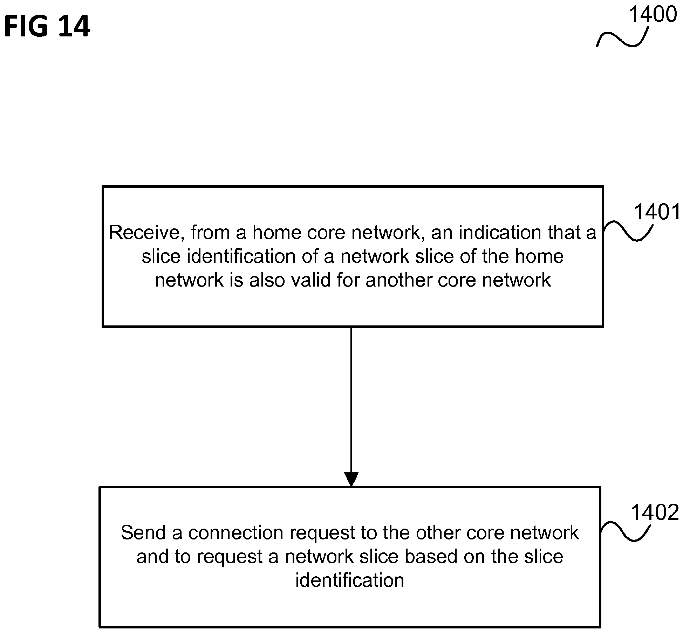

The communication terminal 1300 for example carries out a method as illustrated in figure 14.

Figure 14 shows a flow diagram 1400 illustrating a method for requesting a communication connection.

In 1401, an indication that a slice identification of a network slice of a home core network is also valid for another core network is received from the home core network.

In 1402, a connection request is sent to the other core network and to request a network slice based on the slice identification.

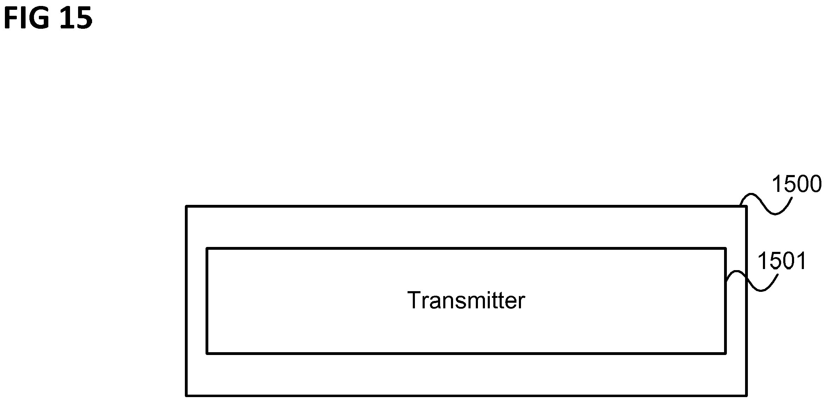

The communication terminal 1300 for example receives the indication from a network component as illustrated in figure 15.

Figure 15 shows a network component 1500 of a communication network.

The network component 1500 comprises a transmitter 1501 configured to transmit to a communication terminal, for which the communication network is a home network, an indication that a slice identification of a network slice of a core network of the communication network is also valid for another core network.

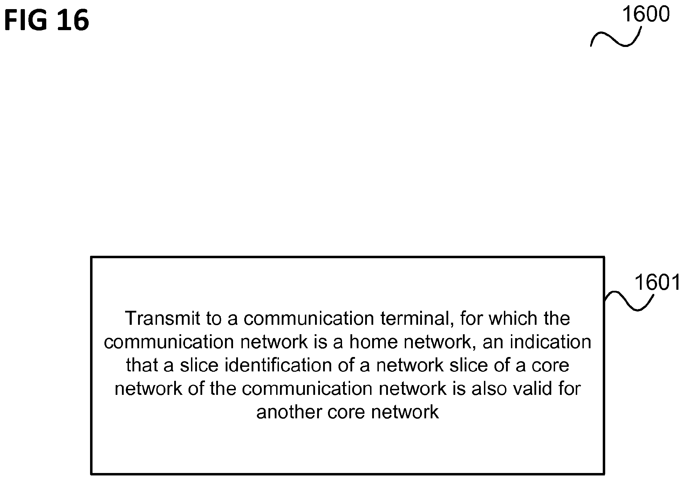

The network component 1500 for example carries out a method as illustrated in figure 16.

Figure 16 shows a flow diagram 1600 illustrating a method for serving a communication terminal.

In 1601, an indication that a slice identification of a network slice of a core network of the communication network is also valid for another core network is transmitted to a communication terminal, for which the communication network is a home network.

Various examples are described below:
Example 1 is a communication terminal as illustrated in figure 13.
Example 2 is the communication terminal of Example 1, wherein the receiver is configured to receive the indication via a first radio access network and the transmitter is configured to send the connection request and to request the network slice via a second radio access network.
Example 3 is the communication terminal of Example 2, wherein the first radio access network and the second radio access network operate according to different radio access technologies.
Example 4 is the communication terminal of Examples 2, wherein the first radio access network operates according to a 4G radio access technology and the second radio access network operates according to a 5G radio access technology.
Example 5 is the communication terminal of any one of Examples 1 to 4, wherein the connection request includes the slice identification in requested Network Slice Selection Assistance information.
Example 6 is the communication terminal of Example 4 or 5, wherein the connection request message is a registration request message.
Example 7 is the communication terminal of any one of Examples 1 to 6, wherein the slice identification is a single Network Slice Selection Assistance information.
Example 8 is the communication terminal of any one of Examples 1 to 7, wherein the receiver is configured to receive the indication in response to an attach request or a session establishment request.
Example 9 is the communication terminal of any one of Examples 1 to 8, wherein the indication indicates that the slice identification of a network slice of the home core network is also valid for a plurality of core networks, wherein the plurality of core networks includes the other core network.
Example 10 is the communication terminal of Example 9, wherein the core networks of the plurality of core networks are roaming partner core networks of the home core network.
Example 11 is the communication terminal of any one of Examples 1 to 10, wherein the receiver is configured to receive an application mapping policy of the network slice via a first radio access network and the transmitter is configured to map an application to the network slice and to request the network slice via a second radio access network.
Example 12 is a method for requesting a connection as illustrated in figure 14.
Example 13 is the method of Example 12, comprising receiving the indication via a first radio access network and sending the connection request and to request the network slice via a second radio access network.
Example 14 is the method of Example 13, wherein the first radio access network and the second radio access network operate according to different radio access technologies.
Example 15 is the method of Example 13, wherein the first radio access network operates according to a 4G radio access technology and the second radio access network operates according to a 5G radio access technology.
Example 16 is the method of any one of Examples 12 to 15, wherein the connection request includes the slice identification in requested Network Slice Selection Assistance information.
Example 17 is the method of Example 15 or 16, wherein the connection request message is a registration request message.
Example 18 is the method of any one of Examples 12 to 17, wherein the slice identification is a single Network Slice Selection Assistance information.
Example 19 is the method of any one of Examples 12 to 18, comprising receiving the indication in response to an attach request or a session establishment request.
Example 20 is the method of any one of Examples 12 to 19, wherein the indication indicates that the slice identification of a network slice of the home core network is also valid for a plurality of core networks, wherein the plurality of core networks includes the other core network.
Example 21 is the method of Example 20, wherein the core networks of the plurality of core networks are roaming partner core networks of the home core network.
Example 22 is the method of any one of Examples 12 to 21, comprising receiving an application mapping policy of the network slice via a first radio access network and mapping an application to the network slice and requesting the network slice via a second radio access network.
Example 23 is a network component of a communication network as illustrated in figure 15.
Example 24 is the network component of Example 23, wherein the slice identification is a single Network Slice Selection Assistance information.
Example 25 is the network component of Example 23 or 24, wherein the transmitter is configured to transmit the indication in response to an attach request or a session establishment request.
Example 26 is the network component of any one of Examples 23 to 25, wherein the indication indicates that the slice identification of a network slice of the home core network is also valid for a plurality of core networks, wherein the plurality of core networks includes the other core network.
Example 27 is the network component of Example 26, wherein the core networks of the plurality of core networks are roaming partner core networks of the core network of the communication network.
Example 28 is a method for serving a communication terminal as illustrated in figure 16.
Example 29 is the method of Example 28, wherein the slice identification is a single Network Slice Selection Assistance information.
Example 30 is the method of Example 28 or 29, comprising transmitting the indication in response to an attach request or a session establishment request.
Example 31 is the method of any one of Examples 28 to 30, wherein the indication indicates that the slice identification of a network slice of the home core network is also valid for a plurality of core networks, wherein the plurality of core networks includes the other core network.
Example 32 is the method of Example 31, wherein the core networks of the plurality of core networks are roaming partner core networks of the core network of the communication network.

According to a further example, a method for notifying a mobile radio terminal device that a network slice instance identification of a first mobile radio communication network is also valid in a second mobile radio communication network is provided. The method comprises receiving a request for registration in the first mobile radio communication network from the mobile radio terminal device, selecting a network slice (e.g. based on the operator's policy and/or information in the request), determining a network slice identification of the selected network slice and whether it is valid in the second mobile radio communication network and responding to the request to the mobile radio terminal including the network slice identification of the selected network slice and, if the identification is valid in the second mobile radio communication network, an indication that the identification is valid in the second mobile radio communication network.

It should be noted that both the first mobile radio communication network and the second mobile radio communication network may have the functionality to operate as both a HPLMN and a VPLMN (e.g. depending on a UE's subscription).

The mobile radio communication networks each comprise a mobile radio access network and a mobile core network.

The first mobile radio communication network may for example further comprise network functions such as a Mobility Management Entity (MME), a Gateway function(e.g. a PGW/PGW-C), etc.

The second mobile radio communication network may further comprise network functions such as an Access and Mobility Management Function (AMF), a Session Management Function (SMF), a Network Slice Selection Function (NSSF), etc.

It should be noted that one or more of the features of any of the examples above may be combined with any one of the other examples.

The components of the communication terminal and the network component (e.g. the receiver, and the transmitters and other components such as corresponding controllers configured to control the receiver and transmitters accordingly) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

The communication terminal may be a portable device such as a portable phone and may comprise typical communication terminal devices such as a transceiver (comprising e.g. a baseband processor, one or more filters, transmit chains, receive chains, amplifiers etc.), an antenna, a subscriber identity module, an application processor, a memory, a display, a battery, a speaker, a microphone etc.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication terminal comprising:
a receiver configured to receive, from a home core network of the communication terminal, an indication that a slice identification of a network slice of the home core network is also valid for another core network;
a transmitter configured to send a connection request to the other core network and to request a network slice based on the slice identification.

2. The communication terminal of claim 1, wherein the receiver is configured to receive the indication via a first radio access network and the transmitter is configured to send the connection request and to request the network slice via a second radio access network.

3. The communication terminal of claim 2, wherein the first radio access network and the second radio access network operate according to different radio access technologies.

4. The communication terminal of claim 2, wherein the first radio access network operates according to a 4G radio access technology and the second radio access network operates according to a 5G radio access technology.

5. The communication terminal of any one of claims 1 to 4, wherein the connection request includes the slice identification in requested Network Slice Selection Assistance information.

6. The communication terminal of claim 4 or 5, wherein the connection request message is a registration request message.

7. The communication terminal of any one of claims 1 to 6, wherein the slice identification is a single Network Slice Selection Assistance information.

8. The communication terminal of any one of claims 1 to 7, wherein the receiver is configured to receive the indication in response to an attach request or a session establishment request.

9. The communication terminal of any one of claims 1 to 8, wherein the indication indicates that the slice identification of a network slice of the home core network is also valid for a plurality of core networks, wherein the plurality of core networks includes the other core network.

10. The communication terminal of claim 9, wherein the core networks of the plurality of core networks are roaming partner core networks of the home core network.

11. The communication terminal of any one of claims 1 to 10, wherein the receiver is configured to receive an application mapping policy of the network slice via a first radio access network and the transmitter is configured to map an application to the network slice and to request the network slice via a second radio access network.

12. A method for requesting a connection comprising:
receiving, from a home core network, an indication that a slice identification of a network slice of the home core network is also valid for another core network;
sending a connection request to the other core network and to request a network slice based on the slice identification.

13. A network component of a communication network comprising:
a transmitter configured to transmit to a communication terminal, for which the communication network is a home core network, an indication that a slice identification of a network slice of a core network of the communication network is also valid for another core network.

14. A method for serving a communication terminal comprising:
transmitting to a communication terminal, for which the communication network is a home core network, an indication that a slice identification of a network slice of a core network of the communication network is also valid for another core network.

## Amended claims

### Amended claims in accordance with Rule 137(2) EPC.

1. A communication terminal comprising:
a receiver configured to receive, from a home core network of the communication terminal, an indication that a slice identification of a network slice of the home core network is also valid for another core network;
a transmitter configured to send a connection request to the other core network and to request a network slice based on the slice identification;
wherein the receiver is configured to receive the indication via a first radio access network and the transmitter is configured to send the connection request and to request the network slice via a second radio access network;
wherein the first radio access network and the second radio access network operate according to different radio access technologies.

2. The communication terminal of claim 1, wherein the first radio access network operates according to a 4G radio access technology and the second radio access network operates according to a 5G radio access technology.

3. The communication terminal of claim 1 or 2, wherein the connection request includes the slice identification in requested Network Slice Selection Assistance information.

4. The communication terminal of claim 2 or 3, wherein the connection request message is a registration request message.

5. The communication terminal of any one of claims 1 to 4, wherein the slice identification is a single Network Slice Selection Assistance information.

6. The communication terminal of any one of claims 1 to 5, wherein the receiver is configured to receive the indication in response to an attach request or a session establishment request.

7. The communication terminal of any one of claims 1 to 6, wherein the indication indicates that the slice identification of a network slice of the home core network is also valid for a plurality of core networks, wherein the plurality of core networks includes the other core network.

8. The communication terminal of claim 7, wherein the core networks of the plurality of core networks are roaming partner core networks of the home core network.

9. The communication terminal of any one of claims 1 to 8, wherein the receiver is configured to receive an application mapping policy of the network slice via a first radio access network and the transmitter is configured to map an application to the network slice and to request the network slice via a second radio access network.

10. A method for requesting a connection comprising:
receiving, from a home core network, an indication that a slice identification of a network slice of the home core network is also valid for another core network;
sending a connection request to the other core network and to request a network slice based on the slice identification;
wherein the indication is received via a first radio access network;
wherein the connection request and the request for the network slice based on the slice identification are transmitted via a second radio access network;
wherein the first radio access network and the second radio access network operate according to different radio access technologies.

11. A network component of a communication network comprising:
a transmitter configured to transmit to a communication terminal, for which the communication network is a home core network, an indication that a slice identification of a network slice of a core network of the communication network is also valid for another core network;
wherein the transmitter is configured to transmit the indication via a first radio access network;
wherein the other core network is a second radio access network;
wherein the first radio access network and the second radio access network operate according to different radio access technologies.

12. A method for serving a communication terminal comprising:
transmitting to a communication terminal, for which the communication network is a home core network, an indication that a slice identification of a network slice of a core network of the communication network is also valid for another core network;
wherein the indication is transmitted via a first radio access network;
wherein the other core network is a second radio access network;
wherein the first radio access network and the second radio access network operate according to different radio access technologies.
